# EUROPEAN PATENT APPLICATION

(11) **EP 3 252 628 A1**
(43) Date of publication of application: **06.12.2017**
(21) Application number: 17167029.2
(22) Date of filing: 19.04.2017
(51) Int. Cl.: G06F 17/50

(54) **SELECTION CONTROL METHOD, SELECTION CONTROL DEVICE, AND SELECTION CONTROL PROGRAM**

(30) Priority: 31.05.2016 JP 2016109331
(71) Applicant: Fujitsu Limited, Kawasaki-shi, Kanagawa 211-8588 (JP)
(72) Inventor: Yonezawa, Kazuhiro, Kanagawa, 243-0018 (JP); Taguchi, Terutoshi, Kanagawa, 243-0018 (JP)
(74) Representative: Hoffmann Eitle

(57) **Abstract**

In a selection control method, a three-dimensional shape image (75) of an assembled article is displayed, a plurality of parts to be displayed in a selection area (76) are specified among a plurality of parts forming the assembled article when the selection area (76) is selected from the three-dimensional shape image (75), and an assembly is selected when the plurality of specified parts include components exceeding a predetermined ratio among a plurality of components forming the assembly.

## Description

### FIELD

The embodiment discussed herein is related to a selection control method, a selection control device, and a selection control program.

### BACKGROUND

Conventionally, construction or the like of an assembly configuration of an assembled article that is configured of a plurality of parts has been configured using a design configuration of the assembled article handed over from a design phase. It is possible to make processing of the construction or the like of the assembly configuration of the assembled article easy by handling the plurality of parts in a unit of an assembly grouped in functional units. It is possible to easily select the plurality of parts from a 3D image of the assembled article. It is possible to easily select the assembly by displaying a hierarchical structure of the plurality of parts forming the assembled article in a tree diagram. In addition, it is possible to easily select the assembly by displaying a manufacturing flow which illustrates an assembling procedure of the plurality of parts.
[Patent Doccument 1] Japanese Laid-open Patent Publication No. 2003-271676
[Patent Doccument 2] Japanese Laid-open Patent Publication No. 2006-277155
[Patent Doccument 3] Japanese Laid-open Patent Publication No. 2013-109512
[Patent Doccument 4] Japanese Laid-open Patent Publication No. 2007-233565

However, when the assembly is selected from the 3D image of the assembled article, there is a problem that it takes time and effort to select a part from the 3D image, and then, select an assembly configured using the selected part again.

Accordingly, it is an object in one aspect of an embodiment of the invention to provide a selection control method, a selection control device, and a selection control program to easily select an assembly.

### SUMMARY

According to an aspect of the embodiments, a selection control method includes: acquiring configuration information of an assembled article; displaying a three-dimensional shape image of the assembled article based on the configuration information; and when receiving selection of a range in the three-dimensional shape image, selecting a specific set element as a unit depending on the range selection when a ratio of elements included in a first element group among elements associated with the specific set element exceeds a predetermined ratio by specifying the first element group included in the selected range and referring to a storage that stores an element and a set element including a plurality of elements to be associated with each other, and individually selecting a plurality of elements included in the first element group depending on the range selection when the ratio of the elements included in the first element group among the elements associated with the specific set element does not exceed the predetermined ratio.

### BRIEF DESCRIPTION OF DRAWINGS

FIG. 1 is a diagram illustrating the overall configuration of a selection control device according to an embodiment;
FIG. 2 is a diagram illustrating an example of part data;
FIG. 3 is a diagram illustrating an example of a data structure of the part data;
FIG. 4 is a diagram illustrating an example of a relationship between a shape of the part and shape information;
FIG. 5 is a diagram illustrating an example of data to be recorded in the shape information;
FIG. 6 is a diagram illustrating an example of assembly data;
FIG. 7 is a diagram illustrating details of a data structure of the assembly data;
FIG. 8 is a conceptual diagram illustrating an example of an assembly;
FIG. 9 is a diagram illustrating an example of a processing target element list;
FIG. 10 is a diagram illustrating an example of a screen to be displayed in a display unit;
FIG. 11 is a diagram illustrating an example of a tree diagram to be displayed in a tree display area;
FIG. 12 is a flowchart illustrating a selection control method according to the embodiment;
FIG. 13 is a flowchart illustrating a process in S3 of the flowchart in FIG. 12;
FIG. 14 is a diagram illustrating an example of the tree diagram to be displayed in the tree display area when a plurality of single parts are selected by a user;
FIG. 15 is a diagram illustrating an example of the tree diagram to be displayed in the tree display area when another plurality of single parts are selected by the user;
FIG. 16 is a diagram illustrating a tree diagram that illustrates components selected according to another selection control method when the plurality of single parts are selected as in the tree diagram in FIG. 15; and
FIG. 17 is a diagram illustrating a computer which executes a selection control program.

### DESCRIPTION OF EMBODIMENTS

Preferred embodiments will be explained with reference to accompanying drawings. Configurations having the same function will be denoted by the same reference sign among a plurality of the embodiments, and the repeated description thereof will be omitted. Incidentally, the selection control method, the selection control device, and the selection control program to be described later are given as mere examples, and do not limit the embodiments. In addition, the respective embodiments to be described later may be combined with each other as far as the combination does not cause any contradiction.

### Selection Control Device

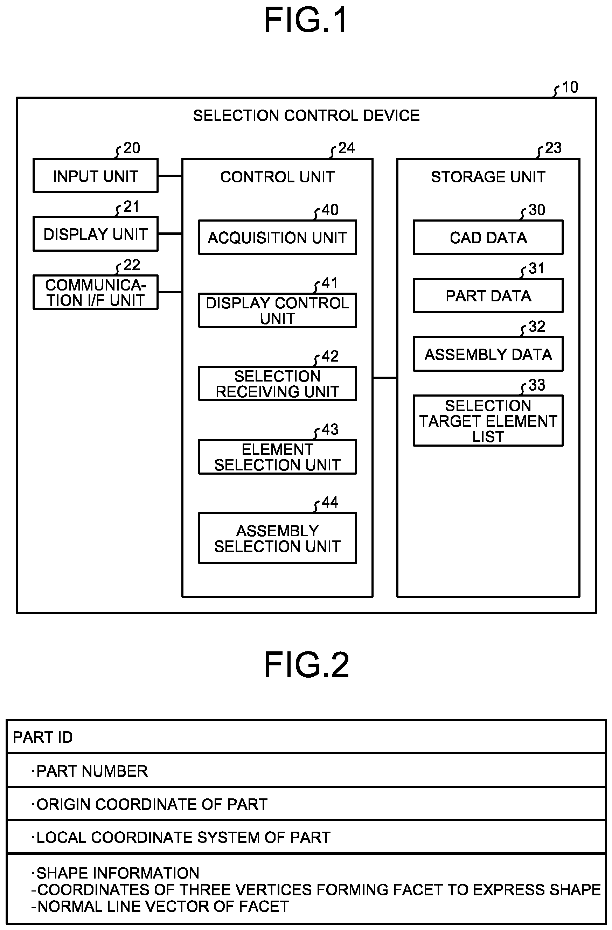

FIG. 1 is a diagram illustrating the overall configuration of a selection control device according to an embodiment. A selection control device 10 according to the embodiment is a device which supports selection of a component among a plurality of components forming an assembled article at the time of creating a document relating to the assembled article. The selection control device 10 is a computer, for example, a personal computer, a server computer, or the like. The selection control device 10 may be implemented as a single computer, and further, may be implemented as a cloud using a plurality of computers. Incidentally, a description will be given in the present embodiment by exemplifying a case where the selection control device 10 is implemented as a single computer. The selection control device 10 may be a design device in which design software to support a design of a designer operates such as a computer aided design (CAD) device. As illustrated in FIG. 1, the selection control device 10 includes an input unit 20, a display unit 21, a communication interface (I/F) unit 22, a storage unit 23, and a control unit 24.

The input unit 20 is an input device to input various types of information. Examples of the input unit 20 include input devices that receive input of an operation of a mouse, a keyboard and the like. The input unit 20 receives the input of various types of information. For example, the input unit 20 receives input of various operations relating to selection of a component. The input unit 20 receives an operational input from a user and outputs operation information indicating the received operation content to the control unit 24.

The display unit 21 is a display device on which a display surface is formed. Examples of the display unit 21 include display devices such as a liquid crystal display (LCD) and a cathode ray tube (CRT). The display unit 21 displays various types of information on the display surface. For example, the display unit 21 displays various screens such as a screen in which an object as a finished product formed of a plurality of components is arranged on a three-dimensional CAD space to be described later on the display surface.

The communication I/F unit 22 is an interface that performs a communication control with another device. The communication I/F unit 22 transmits or receives various types of information to or from another device via a network (not illustrated). For example, the communication I/F unit 22 receives CAD data 30 to be described later from another device. A network interface card such as a LAN card can be employed as the communication I/F unit 22. Incidentally, the selection control device 10 may acquire information such as the CAD data 30 via a storage medium such as a memory card. In addition, the CAD data 30 may be input from the input unit 20.

The storage unit 23 is a storage device such as a hard disk, a solid state drive (SSD), and an optical disk. Incidentally, the storage unit 23 may be a semiconductor memory that is capable of rewriting data. Examples of the semiconductor memory include a random access memory (RAM), a flash memory, a non volatile static random access memory (NVSRAM), and the like.

The storage unit 23 records an operating system (OS) and various programs to be executed by the control unit 24. For example, the storage unit 23 stores a program to execute various types of processing used to select several components among the components of the finished product to be described later. Further, the storage unit 23 stores various types of data used in the program executed by the control unit 24. For example, the storage unit 23 stores the CAD data 30, a plurality of part data 31, a plurality of assembly data 32, and a selection target element list 33.

The CAD data 30 is data which is created by a CAD device and is design data using the three-dimensional CAD. Various types of design information such as three-dimensional coordinate information, which indicates a shape of each part in regard to the finished product formed of a plurality of single parts, are stored in the CAD data 30. The plurality of part data 31 and the plurality of assembly data 32 are data created by data conversion of the CAD data 30 using the control unit 24. The plurality of part data 31 indicate the plurality of single parts forming the finished product and properties relating to each of the plurality of single parts. The plurality of assembly data 32 indicate a plurality of assemblies included in the finished product and indicate components forming each of the plurality of assemblies and properties relating to each of the plurality of assemblies. The assembly is also described as an assembled article or a set element. The component is a single part among the plurality of single parts or an assembly configured of several single parts. The selection target element list 33 indicates a list of components selected from the plurality of single parts indicated by the plurality of part data 31 and the plurality of assemblies indicated by the plurality of assembly data 32.

The control unit 24 is a device that controls the selection control device 10. An electronic circuit or an integrated circuit can be employed as the control unit 24. Examples of the electronic circuit include a central processing unit (CPU), a micro processing unit (MPU), and the like. Examples of the integrated circuit include an application specific integrated circuit (ASIC), a field programmable gate array (FPGA), and the like. The control unit 24 includes an internal memory configured to store programs and control data that define various processing procedures, and executes various types of processing using the programs and control data. The control unit 24 functions as various processors as various programs operate. For example, the control unit 24 includes an acquisition unit 40, a display control unit 41, a selection receiving unit 42, an element selection unit 43, and an assembly selection unit 44.

The acquisition unit 40 acquires the CAD data 30 from an external device and records the acquired CAD data 30 in the storage unit 23. The acquisition unit 40 further performs data conversion of the CAD data 30 to create the plurality of part data 31 and the plurality of assembly data 32 and records the created plurality of part data 31 and the plurality of assembly data 32 in the storage unit 23. The acquisition unit 40 further sets a threshold based on the information input via the input unit 20 and records the threshold in the storage unit 23.

The display control unit 41 creates a screen based on the plurality of part data 31 and the plurality of assembly data 32 and displays the created screen on the display surface of the display unit 21. The selection receiving unit 42 selects a selection area which is a part of the screen, which has been displayed using the display unit 21, based on the information input via the input unit 20. The element selection unit 43 selects several single parts among the plurality of single parts, indicated by the plurality of part data 31, based on the selection area selected by the selection receiving unit 42. The element selection unit 43 further creates the selection target element list 33 indicating a list of the plurality of selected single parts and records the selection target element list 33 in the storage unit 23. The assembly selection unit 44 selects several assemblies among the plurality of assemblies, indicated respectively by the plurality of assembly data 32, based on the selection target element list 33 created by the element selection unit 43. The assembly selection unit 44 updates the selection target element list 33 based on the plurality of selected assemblies.

FIG. 2 is a diagram illustrating an example of the part data. The plurality of part data 31 corresponds to a plurality of single parts forming a finished product. The part data corresponding to a certain single part among the plurality of part data 31 indicates property information relating to the single part. For example, each of the plurality of part data 31 indicates a part ID, a part number, an origin coordinate of the part, a local coordinate system of the part, and shape information as the property information relating to the part as illustrated in FIG. 2.

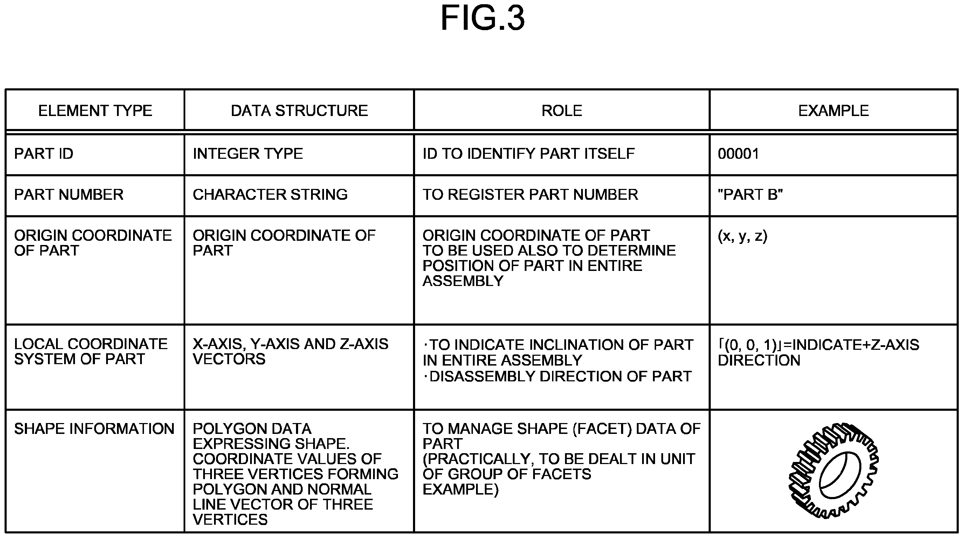

FIG. 3 is a diagram illustrating an example of a data structure of the part data. The part ID is information which is expressed by an integer as illustrated in FIG. 3, and is identification information assigned to each of the parts forming the finished product. That is, an individual number is assigned to each of the parts so as to identify each part. The part number is information which is expressed by a character string and indicates the part number assigned to the part and a part name. The origin coordinate of the part is information which indicates a coordinate to be used as an origin of position information relating to the part among coordinates of the three-dimensional CAD space. The part origin coordinate may differ depending on each part or use a common origin for the respective parts. The local coordinate system of the part is information which indicates a coordinate system to be used to define a position of the part in the three-dimensional CAD space for each part using the part origin coordinate as a reference. The part local coordinate system may differ depending on each part or use a common coordinate system for the respective parts. The shape information is information which indicates the shape of the part in the part local coordinate system, which uses the part origin coordinate as the reference, for each part.

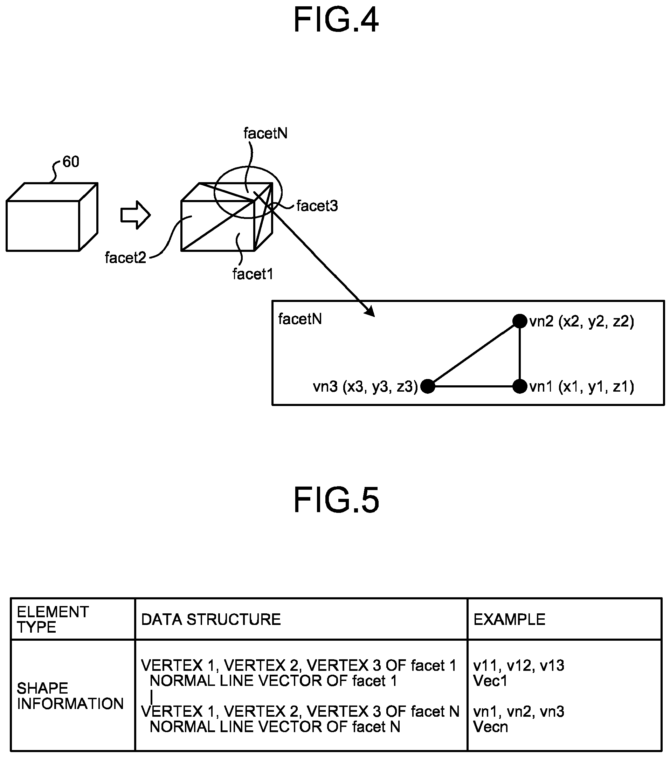

FIG. 4 is a diagram illustrating an example of a relationship between the shape of the part and the shape information. For example, an outer shape of a part 60 having a rectangular outer shape is defined as a combination of triangles facet 1 to facet N as illustrated in FIG. 4. For example, a position of the triangle facet N on the three-dimensional CAD space is set by three-dimensional coordinates (x1,y1,z1), (x2,y2,z2) and (x3,y3,z3) of three vertices and a normal line vector of the facet N.

FIG. 5 is a diagram illustrating an example of data to be recorded in the shape information. As illustrated in FIG. 5, each shape information of the plurality of part data 31 indicates vertex coordinates of a triangle and a normal line vector of a surface of the triangle for each of the triangles facet 1 to facet N forming the part.

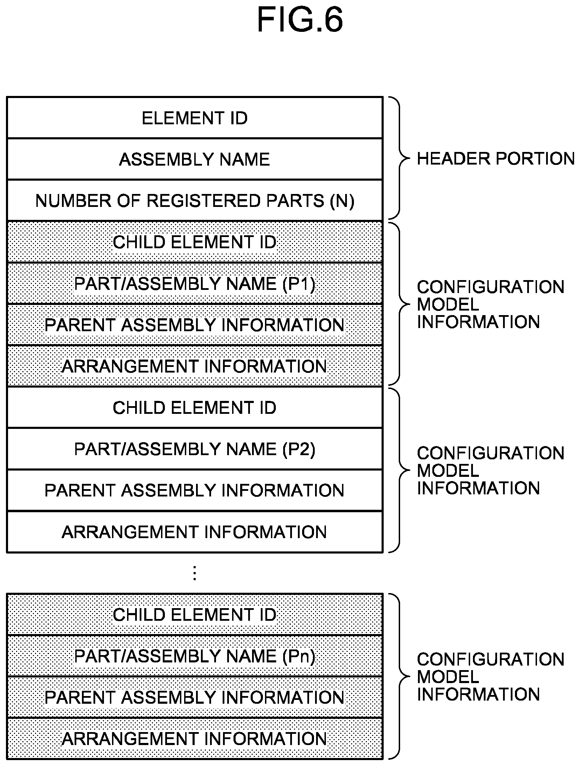

FIG. 6 is a diagram illustrating an example of the assembly data. The plurality of assembly data 32 correspond to the plurality of assemblies. Each of the plurality of assemblies is configured of several single parts among the plurality of single parts which are included in the finished product and correspond to the plurality of part data 31. The assembly data corresponding to a certain assembly among the plurality of assembly data 32 indicates properties relating to the assembly. For example, each of the plurality of assembly data 32 indicates a header portion and a plurality of configuration model information as illustrated in FIG. 6. The header portion indicates an element ID, an assembly name, and the number of registered parts. Each of the plurality of configuration model information indicates a child element ID, a part/assembly name, parent assembly ID information, and arrangement information.

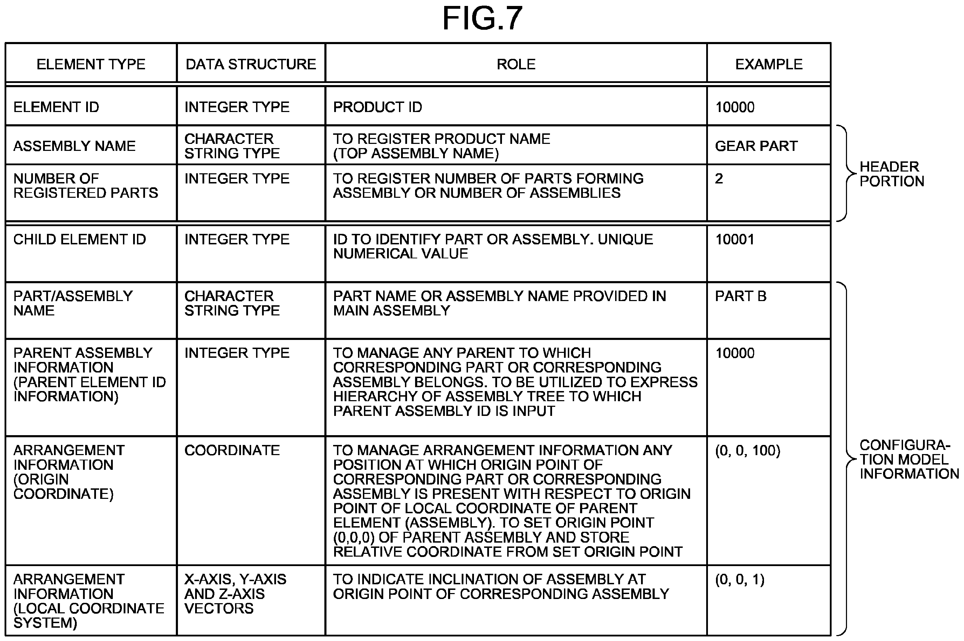

FIG. 7 is a diagram illustrating details of a data structure of the assembly data. As illustrated in FIG. 7, the element ID of the header portion indicated by each of the plurality of assembly data 32 is information which is expressed by an integer and indicates identification information which is assigned to each of the assemblies forming the finished product. That is, an individual number is assigned to each of the assemblies to identify each assembly. The assembly name is information which is expressed by a character string and indicates a name which is associated with the assembly identified by the element ID. The number of registered parts is information which is expressed by an integer and indicates a total number of components (single parts or assemblies) forming the assembly identified by the element ID.

The plurality of configuration model information correspond to the plurality of components forming the assembly that is indicated by the header portion. That is, the number of registered parts of the header portion indicates the number of a plurality of configuration model information. A described order of the plurality of configuration model information in the assembly data matches an order of the plurality of components, which correspond to the plurality of configuration model information, to be assembled in the assembly indicated by the assembly data. A child element ID of single configuration model information corresponding to a single component among the plurality of configuration model information is information which is expressed by an integer and indicates identification information which is assigned to the component. Thus, the child element ID indicates an element ID of certain part data among the plurality of part data 31 or an element ID of certain assembly data among the plurality of assembly data 32. The part/assembly name is information which is expressed by a character string and indicates a name of a single part or an assembly that is identified by the child element ID. The parent assembly ID information is information which is expressed by an integer and indicates identification information indicating a parent assembly configured of the component identified by the child element ID, that is, indicates identification information which is indicated by the element ID of the header portion. The arrangement information indicates an origin coordinate and a local coordinate system. The origin coordinate is information which is expressed by a coordinate and indicates any position at which an origin of the component identified by the child element ID is arranged in the parent assembly. The local coordinate system is information which is expressed by an X-axis vector, a Y-axis vector, and a Z-axis vector and indicates an inclination of the component identified by the element ID.

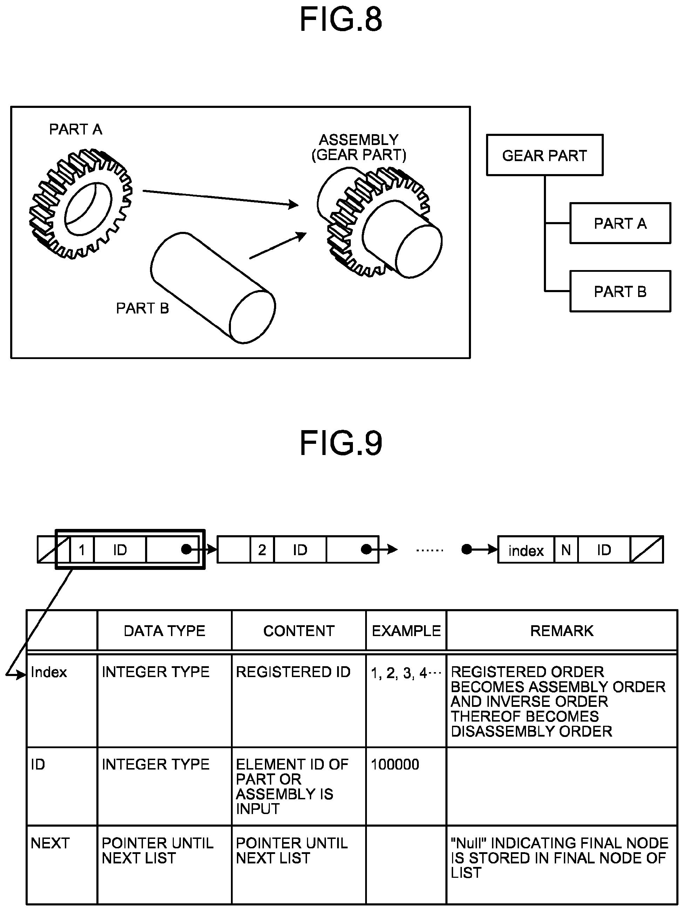

FIG. 8 is a conceptual diagram illustrating an example of the assembly. The assembly as an example is associated with a name called "GEAR PART" and is configured by assembling two single parts as illustrated in FIG. 8. One of the two parts is associated with a name called "PART A", and the other part is associated with a name called "PART B". At this time, assembly data, which corresponds to this assembly among the plurality of assembly data 32, indicates that an assembly name of a header portion is the name "gear part". The number of registered parts indicates two. A part/assembly name of first configuration model information among a plurality of configuration model information of the assembly data indicates the name "PART A". A part/assembly name of second configuration model information among the plurality of configuration model information indicates the name "PART B".

FIG. 9 is a diagram illustrating an example of the processing target element list. The selection target element list 33 indicates a plurality of component data which correspond to the plurality of components as illustrated in FIG. 9. Each of the plurality of component data indicates an Index, an ID, and NEXT. The Index is information which is expressed by an integer and indicates a serial number. The ID is information which is expressed by an integer and indicates an element ID of certain part data among the plurality of part data 31 or an element ID of certain assembly data among the plurality of assembly data 32. The NEXT is information which is expressed by an integer and indicates an Index of certain single component data among the plurality of component data or "Null". At this time, the Index and the NEXT indicate an order of the plurality of components set by the user. That is, when the Index indicates a value n in arbitrary component data among the plurality of component data, the NEXT thereof indicates a value (n+1). When the Index indicates the number of registered parts, the NEXT thereof indicates "Null". For example, an order of the plurality of components to be assembled in a certain assembly is exemplified as the order of the plurality of components.

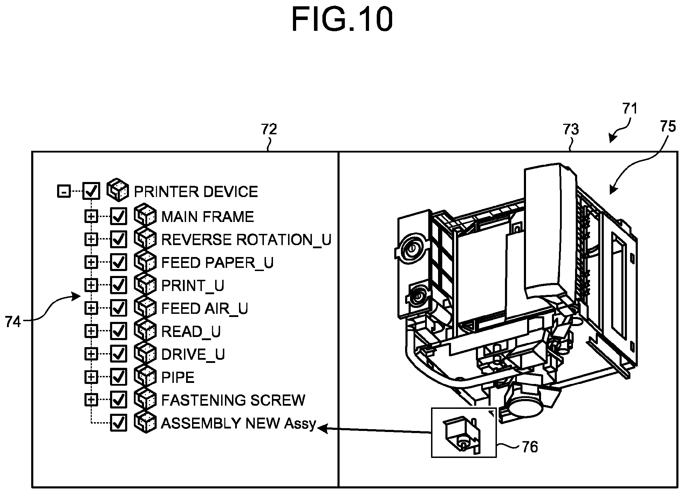

FIG. 10 is a diagram illustrating an example of the screen to be displayed in the display unit. A screen 71 to be displayed in the display unit 21 includes a tree display area 72 and a 3D-view display area 73 as illustrated in FIG. 10. A tree diagram 74 is displayed in the tree display area 72. A plurality of part numbers indicated, respectively, by the plurality of part data 31 and a plurality of assembly names indicated, respectively, by the plurality of assembly data 32 are described to form a hierarchical structure in the tree diagram 74.

The 3D-view display area 73 is arranged in the screen 71 not to overlap the tree display area 72 and a three-dimensional shape image 75 is displayed therein. The three-dimensional shape image 75 is an image of the finished product having a three-dimensional effect that is drawn on the plane and expresses the finished product stereoscopically on the plane. The three-dimensional shape image 75 is formed of a plurality of images which correspond to the plurality of single parts indicated by the plurality of part data 31.

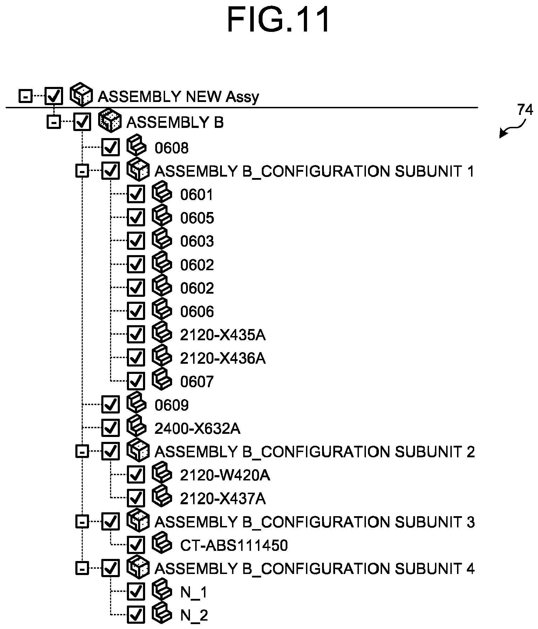

FIG. 11 is a diagram illustrating an example of the tree diagram to be displayed in the tree display area. A plurality of names and a plurality of lines are described in the tree diagram 74 displayed in the tree display area 72 as illustrated in FIG. 11. Each of the plurality of names is associated with one hierarchy among a plurality of hierarchies. Each of the plurality of lines is described to connect a name associated with a certain hierarchy and a name associated with another hierarchy which is different from the certain hierarchy. When names of lower elements associated with a certain hierarchy and a name of an upper element associated with an upper hierarchy of the hierarchy are connected, the plurality of lines indicate that a component corresponding to the name of the upper element is configured of components corresponding to the names of the lower element.

That is, components "ASSEMBLY B", "ASSEMBLY B_CONFIGURATION SUBUNIT 1", "ASSEMBLY B_CONFIGURATION SUBUNIT 2", "ASSEMBLY B_CONFIGURATION SUBUNIT 3" and "ASSEMBLY B_CONFIGURATION SUBUNIT 4" are connected to a name of a component at a lower hierarchy in a line. Thus, the tree diagram 74 indicates that each of the components corresponding to these names is an assembly configured of a plurality of components.

For example, the component "ASSEMBLY B" is configured of seven components "0608", "ASSEMBLY B_CONFIGURATION SUBUNIT 1", "0609", "2400-X632A", "ASSEMBLY B_CONFIGURATION SUBUNIT 2", "ASSEMBLY B_CONFIGURATION SUBUNIT 3" and "ASSEMBLY B_CONFIGURATION SUBUNIT 4". The component "ASSEMBLY B_CONFIGURATION SUBUNIT 1" is configured of nine components "0601", "0605", "0603", "0602", "0602", "0606", "2120-X435A", "2120-X436A" and "0607". The component "ASSEMBLY B_CONFIGURATION SUBUNIT 2" is configured of two components "2120-W420A" and "2120-X437A". The component "ASSEMBLY B_CONFIGURATION SUBUNIT 3" is configured of one component "CT-ABS111450". The component "ASSEMBLY B_CONFIGURATION SUBUNIT 4" is configured of two components "N_1" and "N_2".

The components "0608", "0601", "0605", "0603", "0602", "0602", "0606", "2120-X435A", "2120-X436A", "0607", "0609", "2400-X632A", "2120-W420A", "2120-X437A", "CT-ABS111450", "N_1" and "N_2" are not connected to a name of a component at a lower hierarchy in a line. Thus, the tree diagram 74 indicates that each of the components corresponding to these names is a single part, is not configured of a plurality of single parts, and is not an assembly.

At this time, the display control unit 41 of the control unit 24 creates the tree diagram 74 and the three-dimensional shape image 75 based on the plurality of part data 31 and the plurality of assembly data 32 and displays the screen 71 in which the tree diagram 74 and the three-dimensional shape image 75 are described on the display surface of the display unit 21. The selection receiving unit 42 selects a selection area 76 which is a part of the 3D-view display area 73 based on the information input via the input unit 20. The selection area 76 is displayed in the 3D-view display area 73 to be identifiable from another area. The element selection unit 43 selects an image displayed in the selection area 76 among the plurality of images forming the three-dimensional shape image 75 and selects a plurality of single parts forming the selected image among the plurality of single parts indicated by the plurality of part data 31.

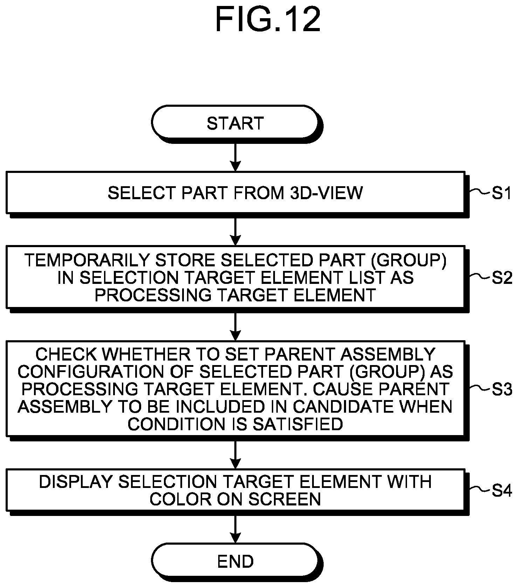

[Selection Control Method] The selection control method according to the embodiment is executed by the selection control device 10. FIG. 12 is a flowchart illustrating the selection control method according to the embodiment. A user can set a threshold in advance by inputting the threshold via the input unit 20 into the selection control device 10. When the threshold is set, the selection control device 10 records the set threshold in the storage unit 23. When the CAD data 30 is acquired, the selection control device 10 records the acquired CAD data 30 in the storage unit 23. Further, the selection control device 10 performs data conversion of the CAD data 30 to create the plurality of part data 31 and the plurality of assembly data 32 and records the created plurality of part data 31 and the plurality of assembly data 32 in the storage unit 23. Further, the selection control device 10 creates the tree diagram 74 and the three-dimensional shape image 75 based on the plurality of part data 31 and the plurality of assembly data 32. The selection control device 10 displays the tree diagram 74 in the tree display area 72 and displays the three-dimensional shape image 75 in the 3D-view display area 73.

The user can select the selection area 76 from the 3D-view display area 73 by operating the input unit 20. When receiving the selection of the selection area 76 from the 3D-view display area 73, the selection control device 10 selects an image to be displayed in the selection area 76 among a plurality of images forming the three-dimensional shape image 75. Next, the selection control device 10 selects a plurality of single parts, which correspond to the selected image, among a plurality of single parts indicated by the plurality of part data 31 (S1).

Further, the selection control device 10 updates the tree diagram 74 such that a plurality of names, which correspond to the plurality of selected single parts are displayed in the tree diagram 74 in a display format that is different from a display format in which a plurality of names, which correspond to a plurality of unselected single parts, are displayed in the tree diagram 74. The selection control device 10 updates the three-dimensional shape image 75 such that a plurality of images, which correspond to the plurality of selected single parts, are displayed in the three-dimensional shape image 75 in another color that is different from a color in which a plurality of images, which correspond to the plurality of unselected single parts, are displayed in the three-dimensional shape image 75. The selection control device 10 displays the updated tree diagram 74 in the tree display area 72 and displays the updated three-dimensional shape image 75 in the 3D-view display area 73.

When a plurality of single parts are selected based on the selection area 76, the selection control device 10 temporarily stores a list of the plurality of selected single parts in the storage unit 23 as the selection target element list 33. That is, the selection control device 10 creates the selection target element list 33 such that element IDs of a plurality of part data corresponding to the plurality of selected single parts among the plurality of part data 31 are indicated, respectively, by a plurality of component data of the selection target element list 33 (S2).

The selection control device 10 determines whether to add several assemblies among a plurality of assemblies, indicated by the plurality of assembly data 32, in the selection target element list 33 based on the selection target element list 33. When it is determined to add several assembly data in the selection target element list 33, the selection control device 10 adds the several assembly data in the selection target element list 33 (S3).

Next, the selection control device 10 updates the tree diagram 74 such that a plurality of names, which correspond to a plurality of component indicated in the selection target element list 33, are displayed in the tree diagram 74 in another color that is different from a color in which a plurality of other names that has not been selected are displayed. The selection control device 10 updates the three-dimensional shape image 75 such that a plurality of images, which correspond to the plurality of component indicated in the selection target element list 33, are displayed in three-dimensional shape image 75 in another color that is different from a color in which a plurality of other images are displayed. The selection control device 10 displays the updated tree diagram 74 in the tree display area 72 and displays the updated three-dimensional shape image 75 in the 3D-view display area 73 (S4).

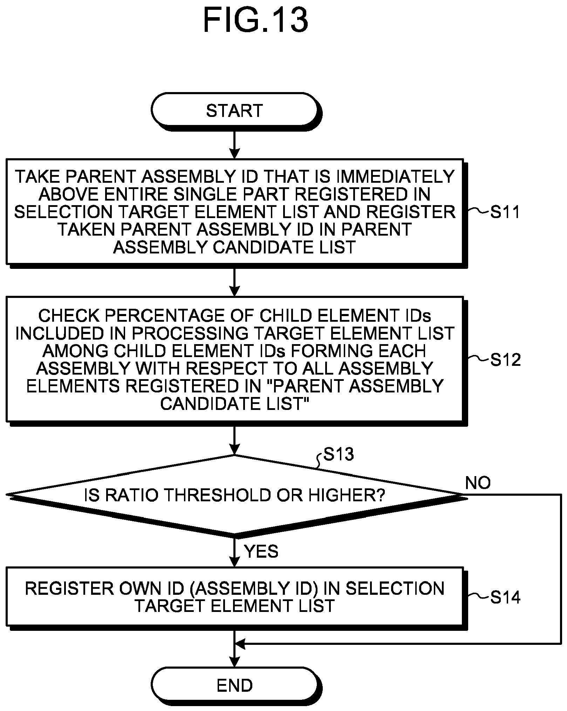

FIG. 13 is a flowchart illustrating a process in S3 of the flowchart in FIG. 12. When the selection target element list 33 is created, the selection control device 10 takes a parent assembly that is immediately above the entire single part indicated by the selection target element list 33 and creates a parent assembly candidate list as illustrated in FIG. 13 (S11). That is, the selection control device 10 retrieves assembly data in which any of the plurality of single parts indicated in the selection target element list 33 are indicated by any of a plurality of component data, from the plurality of assembly data 32. The selection control device 10 creates the parent assembly candidate list such that the retrieved assembly data among the plurality of assembly data 32 is indicated by the parent assembly candidate list.

Next, the selection control device 10 calculates a percentage of components included in the selection target element list 33 among components forming each of the assembly with respect to all the assemblies listed in the parent assembly candidate list. That is, the selection control device 10 calculates a plurality of ratios which correspond to the plurality of assembly data indicated by the parent assembly candidate list (S12). A ratio corresponding to certain assembly data among the plurality of ratios indicates a percentage of components included in the selection target element list 33 among components of an assembly indicated by the certain assembly data. That is, the ratio indicates a value obtained by dividing the number of the components included in the selection target element list 33 among the components corresponding to plurality of configuration model information of the assembly data by the number of registered parts indicated by a header portion of the assembly data.

After calculating the plurality of ratios, the selection control device 10 determines whether each of the plurality of ratios is a threshold or higher (S13). When there is assembly data whose ratio is the threshold or higher (Yes in S13) in the parent assembly candidate list, the selection control device 10 adds the assembly data, which has the corresponding ratio that is the threshold or higher in the parent assembly candidate list, in the selection target element list 33 (S14).

When the assembly data is added in the selection target element list 33 in S14, the selection control device 10 newly creates a parent assembly candidate list again. That is, the selection control device 10 retrieves assembly data in which an element ID of the added assembly data is indicated by any of a plurality of configuration model information from the plurality of assembly data 32. The selection control device 10 creates the parent assembly candidate list in which the retrieved assembly data is listed. Next, the selection control device 10 calculates a percentage of assemblies included in the selection target element list 33 among a plurality of assemblies indicated by the parent assembly candidate list. The selection control device 10 updates the selection target element list 33 such that the selection target element list 33 further indicates an assembly whose calculated ratio is the threshold or higher among the plurality of assemblies indicated by the parent assembly candidate list. According to such a process, the selection control device 10 can select a parent assembly of a plurality of selected single parts based on the selection area 76 as well as list a parent assembly of the parent assembly in the selection target element list 33.

Further, such a process is repeatedly executed until an assembly is no longer added in the selection target element list 33. According to such repetition, the selection control device 10 can list not only the parent assembly of the plurality of selected single parts based on the selection area 76 but also all assemblies including the plurality of single parts in the selection target element list 33.

Next, the selection control device 10 removes data, which relates to a component forming the assembly listed in the selection target element list 33, among a plurality of components listed in the selection target element list 33.

The selection target element list 33 created by the selection control device 10 is used, for example, to construct an assembly configuration of an assembled article. At this time, the assembly is also listed in the selection target element list 33, and thus, the user can easily construct the assembly configuration of the assembled article as compared to a case where the plurality of single parts are only listed in the selection target element list 33. According to this selection control method, a suitable assembly is selected by the selection control device 10 as the user sets the threshold.

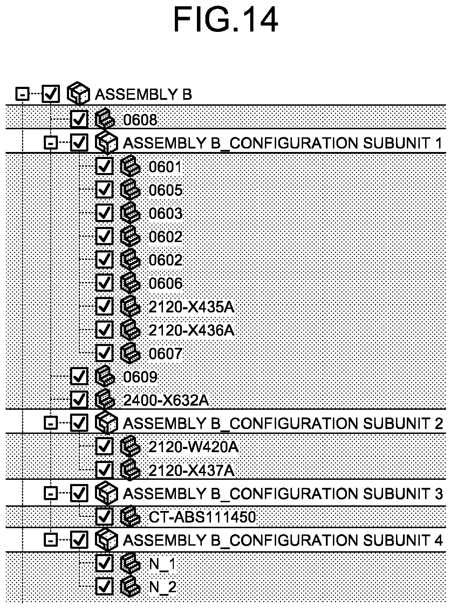

FIG. 14 is a diagram illustrating an example of the tree diagram to be displayed in the tree display area when a plurality of single parts are selected by the user. As illustrated in FIG. 14, names of single parts selected through the selection area 76 are displayed with hatching and other names that are not selected are displayed without hatching in the tree diagram 74 to be displayed in S1. That is, a plurality of single parts "0608", "0601", "0605", "0603", "0602", "0602", "0606", "2120-X435A", "2120-X436A", "0607", "0609", "2400-X632A", "2120-W420A", "2120-X437A", "CT-ABS111450", "N_1" and "N_2" are selected in FIG. 14.

At this time, the selection control device 10 adds the assembly "ASSEMBLY B_CONFIGURATION SUBUNIT 1" in the selection target element list 33 since all components of the assembly "ASSEMBLY B_CONFIGURATION SUBUNIT 1" have been selected. Further, the selection control device 10 adds the assembly "ASSEMBLY B_CONFIGURATION SUBUNIT 2" in the selection target element list 33 since all components of the assembly "ASSEMBLY B_CONFIGURATION SUBUNIT 2" have been selected. Further, the selection control device 10 adds the assembly "ASSEMBLY B_CONFIGURATION SUBUNIT 3" in the selection target element list 33 since all components of the assembly "ASSEMBLY B_CONFIGURATION SUBUNIT 3" have been selected. Further, the selection control device 10 adds the assembly "ASSEMBLY B_CONFIGURATION SUBUNIT 4" in the selection target element list 33 since all components of the assembly "ASSEMBLY B_CONFIGURATION SUBUNIT 4" have been selected. Further, the selection control device 10 adds the assembly "ASSEMBLY B" in the selection target element list 33 since all components of the assembly "ASSEMBLY B" have been selected.

The selection control device 10 removes the components of the assemblies "ASSEMBLY B_CONFIGURATION SUBUNIT 1" to "ASSEMBLY B_CONFIGURATION SUBUNIT 4" from the selection target element list 33 and removes the components of the assembly "ASSEMBLY B" from the selection target element list 33. As a result, the selection target element list 33 that has been created by the selection control device 10 is updated to indicate "ASSEMBLY B".

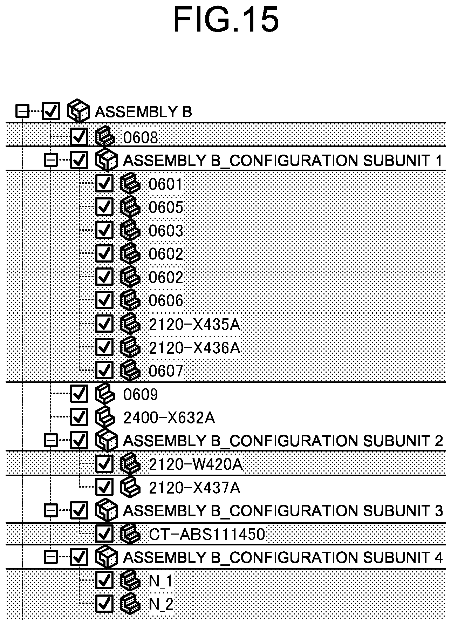

FIG. 15 is a diagram illustrating an example of the tree diagram to be displayed in the tree display area when another plurality of single parts are selected by the user. In FIG. 15, a plurality of single parts which correspond to the names "0608", "0601", "0605", "0603", "0602", "0602", "0606", "2120-X435A", "2120-X436A", "0607", "2120-W420A", "CT-ABS111450", "N_1" and "N_2" are selected. In FIG. 15, a plurality of single parts which correspond to "0609", "2400-X632A" and "2120-X437A" are not selected.

In the case where the plurality of single parts have been selected as illustrated in FIG. 15, the selection control device 10 selects "ASSEMBLY B_CONFIGURATION SUBUNIT 1", "ASSEMBLY B_CONFIGURATION SUBUNIT 3" and "ASSEMBLY B_CONFIGURATION SUBUNIT 4" when the threshold has been set to 100%. At this time, the selection control device 10 does not select "ASSEMBLY B_CONFIGURATION SUBUNIT 2" since "2120-X437A" which is the component of "ASSEMBLY B_CONFIGURATION SUBUNIT 2" has not been selected. Next, the selection control device 10 removes the components of the assemblies "ASSEMBLY B_CONFIGURATION SUBUNIT 1", "ASSEMBLY B_CONFIGURATION SUBUNIT 3" and "ASSEMBLY B_CONFIGURATION SUBUNIT 4" from the selection target element list 33. As a result, the selection target element list 33 that has been created by the selection control device 10 is updated to indicate the assemblies "ASSEMBLY B_CONFIGURATION SUBUNIT 1", "ASSEMBLY B_CONFIGURATION SUBUNIT 3" and "ASSEMBLY B_CONFIGURATION SUBUNIT 4" and the single parts "0608" and "2120-W420A".

In the case where the plurality of single parts have been selected as illustrated in FIG. 15, the selection control device 10 selects the four assemblies "ASSEMBLY B_CONFIGURATION SUBUNIT 1" to "ASSEMBLY B_CONFIGURATION SUBUNIT 4" and selects "ASSEMBLY B" when the threshold has been set to 50%. As a result, the selection target element list 33 is created to indicate "ASSEMBLY B".

In the selection control method according to the embodiment, the selection control device 10, which is a computer, executes the following processes. The selection control device 10 acquires configuration information of an assembled article and displays the three-dimensional shape image 75 of the assembled article based on the configuration information. When receiving selection of a range regarding the three-dimensional shape image 75, a first element group included in the selected selection area 76 is specified. The selection control device 10 stores elements and an assembly including a plurality of elements in the storage unit 23 so as to be associated with each other. The selection control device 10 refers to the storage unit 23 and selects a specific assembly as a unit depending on the range selection when a ratio of elements included in the first element group among the elements associated with the specific assembly exceeds a predetermined ratio. When a ratio of the elements included in the first element group among the elements associated with the specific assembly does not exceed the predetermined ratio, the selection control device 10 individually selects the plurality of elements included in the first element group depending on the range selection.

According to this selection control method, the selection control device 10 can select not only the single part but also the assembly as the user specifies the first element group using the three-dimensional shape image 75. Thus, the user can easily select the assembly using the three-dimensional shape image 75 according to this selection control method.

In addition, a specific assembly is selected as a unit depending on a range selection when elements included in the first element group include all of a plurality of elements associated with the specific assembly in the selecting process in the selection control method according to the embodiment. That is, when all components of a specific assembly are not selected by the user, the specific assembly is not selected in this selection control method. Thus, the user can suitably select the assembly using the three-dimensional shape image 75 according to this selection control method.

In addition, the storage unit 23 further records the plurality of assemblies and a plurality of parent sets so as to be associated with each other. In a selecting process, a specific parent set, which corresponds to a specific assembly is specified among the plurality of parent sets, and the specific parent set is further selected depending on a range selection when a ratio of the specific assembly among assemblies included in the specific parent set exceeds a predetermined ratio. According to this selection control method, the selection control device 10 can also select a parent assembly of a parent assembly of the single part selected by the user.

In addition, a display format in which an image corresponding to a specific assembly, which has been selected among the plurality of images forming the three-dimensional shape image 75, is displayed is changed into another display format in the selection control method according to the embodiment. The display format after the change is different from a display format in which an image not corresponding to the specific assembly, which has been selected among the plurality of images, is displayed. According to this selection control method, it is possible to display any assembly that has been selected on the three-dimensional shape image 75 in an easily understandable manner.

In addition, the selection control device 10 further displays a hierarchical structure of the plurality of elements forming the assembly and the plurality of assemblies in the selection control method according to the embodiment. The selection control device 10 changes a display format in which a specific assembly selected in the hierarchical structure is displayed in another display format that is different from a display format in which another assembly, different from the specific assembly selected among the plurality of assemblies, is displayed. According to this selection control method, it is possible to display any assembly that has been selected using the hierarchical structure in an easily understandable manner.

Meanwhile, a single part, which is not included in the assembly selected by the user among the plurality of selected single parts, is included in the selection target element list 33 in the above-described selection control method. However, the single part which is not included in the assembly may be removed from the selection target element list 33.

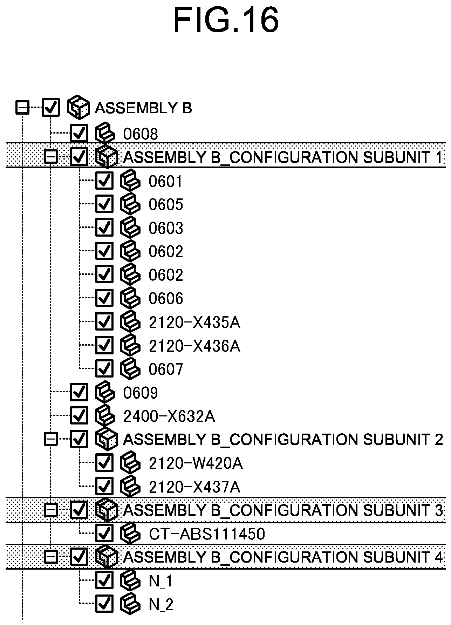

FIG. 16 is a diagram illustrating a tree diagram that illustrates components selected according to another selection control method when the plurality of single parts are selected as in the tree diagram in FIG. 15. As described above, the plurality of single parts which correspond to the names "0608", "0601", "0605", "0603", "0602", "0602", "0606", "2120-X435A", "2120-X436A", "0607", "2120-W420A", "CT-ABS111450", "N_1" and "N_2" are selected in FIG. 15. In FIG. 15, the plurality of single parts which correspond to "0609", "2400-X632A" and "2120-X437A" are not selected. In the case where the plurality of single parts have been selected in this manner, the assemblies "ASSEMBLY B_CONFIGURATION SUBUNIT 1", "ASSEMBLY B_CONFIGURATION SUBUNIT 3" and "ASSEMBLY B_CONFIGURATION SUBUNIT 4" are selected when the threshold has been set to 100%.

As the assembly "ASSEMBLY B_CONFIGURATION SUBUNIT 1" has been selected, "0601", "0605", "0603", "0602", "0602", "0606", "2120-X435A", "2120-X436A" and "0607", which are the components of this assembly, are removed from the selection target element list 33. As the assembly "ASSEMBLY B_CONFIGURATION SUBUNIT 3" has been selected, "CT-ABS111450", which is the component of this assembly, is removed from the selection target element list 33. As the assembly "ASSEMBLY B_CONFIGURATION SUBUNIT 4" has been selected, "N_1" and "N_2", which are the components of this assembly, are removed from the selection target element list 33.

Next, as the parent assembly "ASSEMBLY B" of the single part "0608" has not been selected, the single part "0608" is removed from the selection target element list 33. As the parent assembly "ASSEMBLY B_CONFIGURATION SUBUNIT 2" of the single part "2120-W420A" has not been selected, the single part "2120-W420A" is removed from the selection target element list 33. As a result, the selection target element list 33 is updated to indicate the assemblies "ASSEMBLY B_CONFIGURATION SUBUNIT 1", "ASSEMBLY B_CONFIGURATION SUBUNIT 3" and "ASSEMBLY B_CONFIGURATION SUBUNIT 4" as illustrated in FIG. 16.

In the selection control method according to the embodiment, the selection control device 10, which is a computer, executes the following processes. The selection control device 10 acquires configuration information of an assembled article and displays the three-dimensional shape image 75 of the assembled article based on the configuration information. When receiving selection of a range regarding the three-dimensional shape image 75, a first element group included in the selected selection area 76 is specified. The selection control device 10 stores elements and an assembly including a plurality of elements in the storage unit 23 so as to be associated with each other. The assembly is described as a "set element" in the claims. When a ratio of elements included in the first element group among the elements associated with a specific assembly exceeds a predetermined ratio, the selection control device 10 selects the specific assembly as a unit depending on a range selection except for an element of the first element group that is not included in the specific assembly.

This selection control method can select the assembly as the user specifies the single part using the three-dimensional shape image 75. Thus, the user can easily select the assembly using the three-dimensional shape image 75 according to this selection control method.

Incidentally, the selection control device 10 displays the image of selected components and the image of unselected components in the three-dimensional shape image 75 using different colors, but both the images may be displayed using different display modes. For example, the selection control device 10 may display the image of selected components to blink and display the image of unselected components not to blink in the three-dimensional shape image 75. The selection control device 10 can facilitate the selection of the assembly using the three-dimensional shape image 75 in this case, too.

Incidentally, the selection control device 10 display the name of the selected component and the name of the unselected component in the tree diagram 74 to be distinguished from each other depending on presence or absence of the hatching. However, both the names may be displayed using different display modes other than the hatching. For example, the selection control device 10 may display the name of the selected component in another color, different from a color in which the name of the unselected component is displayed, in the tree diagram 74. Further, the selection control device 10 may display the name of the selected component with an underline and display the name of the unselected component without an underline in the tree diagram 74. The selection control device 10 can facilitate the selection of the assembly using the three-dimensional shape image 75 in this case, too.

In addition, each component of each device illustrated in the drawings are functional and conceptually and does not need to be physically configured as illustrated in the drawings. That is, a specific mode of separation and integration of each device is not limited only to those illustrated in the drawings, and all or a part thereof may be configured to be functionally or physically separated or integrated in arbitrary units depending on various loads, use situations, and the like. For example, the respective processors of the acquisition unit 40, the display control unit 41, the selection receiving unit 42, the element selection unit 43, and the assembly selection unit 44, illustrated in FIG. 1, may be appropriately integrated or separated. In addition, for each processing function to be performed by each processor, all or any part of the processing functions may be implemented by a CPU and a program analyzed and executed by the CPU or may be implemented as hardware by wired logic.

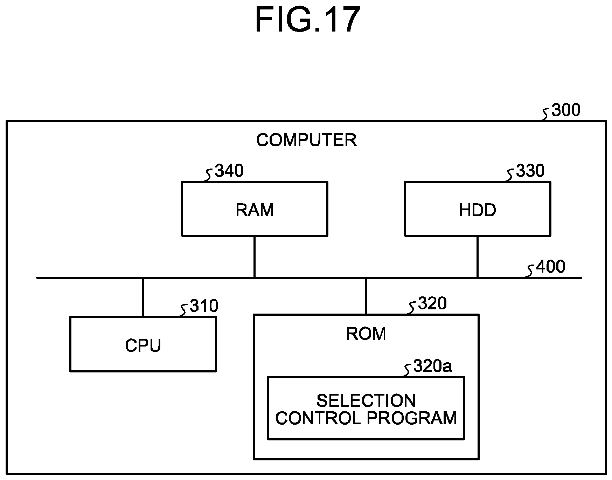

In addition, the various processes described in the above-described embodiment may be realized by executing a program that has been prepared in advance on a computer system, such as a personal computer or a workstation. Therefore, an example of the computer system that executes a program having the same functions as those of the above-described embodiment will be described hereinafter. FIG. 17 is a diagram illustrating the computer which executes the selection control program.

As illustrated in FIG. 17, a computer 300 includes a CPU 310, a read only memory (ROM) 320, a hard disk drive (HDD) 330, and a random access memory (RAM) 340. These respective units 310 to 340 are connected via a bus 400.

A selection control program 320a, which demonstrates the same functions as those of the respective processors of the above-described embodiment, is stored in the ROM 320 in advance. For example, the selection control program 320a, which demonstrates the same functions as those of the acquisition unit 40, the display control unit 41, the selection receiving unit 42, the element selection unit 43, and the assembly selection unit 44 of the above-described embodiment, is stored. Incidentally, the selection control program 320a may be appropriately separated.

Various types of data are stored in the HDD 330. For example, the HDD 330 stores an OS and various types of data.

Further, the CPU 310 executes the same operations as those of the respective processors of the embodiment by reading the selection control program 320a from the ROM 320 and executing the read selection control program. That is, the selection control program 320a executes the same operations as those of the acquisition unit 40, the display control unit 41, the selection receiving unit 42, the element selection unit 43, and the assembly selection unit 44 of the embodiment.

Incidentally, the above-described selection control program 320a does not need to be stored in the ROM 320 from the beginning. The selection control program 320a may be stored in the HDD 330.

For example, the program may be stored in a "portable physical medium" to be inserted into the computer 300. Examples of the portable physical media include a flexible disk (FD), a compact disk read only memory (CD-ROM), a digital versatile disk (DVD), a magneto-optical disc, an IC card, and the like. Further, the computer 300 may be configured to read the program from those portable physical media and execute the read program.

Further, the program is stored in "another computer (or a server)" and the like which is connected to the computer 300 via a public line, the Internet, a LAN, a WAN, and the like. Further, the computer 300 may be configured to read the program from those portable physical media and execute the read program.

According to one aspect of an embodiment of the invention, it is possible to easily select the assembly.

## Claims

1. A selection control method comprising:
acquiring (40) configuration information of an assembled article;
displaying (41) a three-dimensional shape image of the assembled article based on the configuration information; and
when receiving selection of a range in the three-dimensional shape image, selecting (43) a specific set element as a unit depending on the range selection when a ratio of elements included in a first element group among elements associated with the specific set element exceeds a predetermined ratio by specifying the first element group included in the selected range and referring to a storage that stores an element and a set element including a plurality of elements to be associated with each other, and individually selecting a plurality of elements included in the first element group depending on the range selection when the ratio of the elements included in the first element group among the elements associated with the specific set element does not exceed the predetermined ratio.

2. The selection control method according to claim 1, wherein the specific set element is selected as a unit depending on the range selection when the elements included in the first element group include all the plurality of elements associated with the specific set element at the selecting.

3. The selection control method according to claim 1 or 2, wherein the storage further records a plurality of set elements and a plurality of parent sets to be associated with each other, and
a specific parent set corresponding to the specific set element is specified among the plurality of parent sets, and the specific parent set is further selected depending on the range selection when a ratio of the specific set element among set elements included in the specific parent set exceeds the predetermined ratio at the selecting.

4. The selection control method according to any one of claims 1 to 3, wherein a display format in which an image, which corresponds to the selected specific set element among a plurality of images forming the three-dimensional shape image, is displayed is changed into another display format that is different from a display format in which an image which does not correspond to the selected specific set element among the plurality of images is displayed.

5. The selection control method according to any one of claims 1 to 4, wherein a hierarchical structure of a plurality of elements and a plurality of set elements included in the assembled article is further displayed, and a display format in which the specific set element selected in the hierarchical structure is displayed is changed into another display format that is different from a display format in which another set element, different from the specific set element selected among the plurality of set elements, is displayed.

6. The selection control method according to claim 1, wherein the selection as the unit excludes an element that is not included in the specific set element among the first element group.

7. A selection control device (10) comprising:
an acquisition unit (40) configured to acquire configuration information of an assembled article;
a display control unit (41) configured to display a three-dimensional shape image of the assembled article based on the configuration information; and
a selection unit (43) configured to specify a first element group included in a selected range when receiving selection of the range in the three-dimensional shape image, refer to a storage that records an element and a set element including a plurality of elements to be associated with each other, select a specific set element as a unit depending on the range selection when a ratio of elements included in the first element group among elements associated with the specific set element exceeds a predetermined ratio, and individually select a plurality of elements included in the first element group depending on the range selection when the ratio of the elements included in the first element group among the elements associated with the specific set element does not exceed the predetermined ratio.

8. A selection control program (320a) that causes a computer (300) to execute a process comprising:
acquiring (40) configuration information of an assembled article;
displaying (41) a three-dimensional shape image of the assembled article based on the configuration information; and
when receiving selection of a range in the three-dimensional shape image, selecting (43) a specific set element as a unit depending on the range selection when a ratio of elements included in a first element group among elements associated with the specific set element exceeds a predetermined ratio by specifying the first element group included in the selected range and referring to a storage that records an element and a set element including a plurality of elements to be associated with each other, and individually selecting a plurality of elements included in the first element group depending on the range selection when the ratio of the elements included in the first element group among the elements associated with the specific set element does not exceed the predetermined ratio.
